# EUROPEAN PATENT APPLICATION

(11) **EP 4 686 800 A1**
(43) Date of publication of application: **04.02.2026**
(21) Application number: 25166812.5
(22) Date of filing: 27.03.2025
(51) Int. Cl.: E06B 3/673, E06B 3/663

(54) **APPARATUS AND METHOD FOR APPLYING A FLEXIBLE SPACER FOR INSULATING GLASS**

(30) Priority: 29.07.2024 IT 202400017545
(71) Applicant: Forel S.P.A. Unipersonale, 31056 Roncade, Treviso (IT)
(72) Inventor: VIANELLO, Fortunato, 31056 Roncade, Treviso (IT); VIANELLO, Riccardo, 31056 Roncade, Treviso (IT)
(74) Representative: Busana, Omar

(57) **Abstract**

An apparatus (2) for applying a flexible spacer to a glass plate (1) comprising an applicator (20) for flexible spacers, and a support backing (10) for the glass plate (1). The support backing (10) comprises a lateral support (102) and a translator (103). The lateral support (102) comprises an inlet support (1021), a process support (1022), and an outlet support (1023), wherein the process support (1022), arranged between inlet support (1022) and outlet support (1023) is adapted to contrast the action of the applicator (20) according to a direction (Z) substantially perpendicular to said lateral support (102). Furthermore, the apparatus comprises a translator (103) adapted to move along a direction (X). The apparatus comprises a contrasting device (106) comprising a contrasting element (1063) adapted to be moved between a support position, in which it forms a continuation of said process support (1022), and a retracted position, in which it is adapted to allow the passage of the translator (103).

## Description

### FIELD OF APPLICATION

The present invention relates to an apparatus and method for applying a flexible spacer for insulating glass to a glass plate.

### BACKGROUND ART

In the context of machines for manufacturing insulating glass, there is a growing demand in the market (resulting in a great deal of attention from manufacturers) for a more pronounced automation of the manufacturing process, especially in the preparation and installation of the flexible spacer.

This has resulted in significant economic and efficiency benefits for insulating glass manufacturers, while helping to increase product quality by virtue of the accuracy and repeatability that automated operations can ensure.

An example of a machine for installing flexible spacers is described in EP2177703B1. This patent describes an apparatus in which flexible spacers are used, substantially consisting of a polymer matrix strip, which is initially wound into rolls.

For example, an example of the type of spacers is described in EP3354836A1.

In essence, in this type of apparatuses, the spacer, provided with an appropriate acrylic adhesive, is unwound from the roll and adhered progressively about the periphery of the plate.

A further advantage linked to the automation of the process in this type of apparatuses relates to the possibility of manufacturing triple insulating glasses with high precision, because the automatic application ensures that the two spacers, placed on opposite faces of the central plate, are always perfectly aligned.

A further recent innovation in the glass industry relates the commercial availability of very thin glasses (e.g., from 0.3 to 1 mm thick) typically used in the electronics industry, e.g., for manufacturing flat screens for PCs or tablets.

This type of glasses can also be advantageously used in the field of architectural glass (insulating glass), in particular to obtain the central glass of a triple insulating glass in order to limit the weights of the manufactured item while ensuring the same performance as traditional triple glasses.

However, such thin glasses pose additional challenges regarding the application of flexible spacers because it becomes more difficult to apply the necessary pressure to ensure adhesion.

The apparatuses for this type of process substantially comprise a support backing on which a glass plate can slide in a first direction X, parallel to the lower support edge thereof, and an applicator for the flexible spacer.

The support backing, in turn, comprises a lateral support, lower conveyors, and a translator.

The lower conveyors support the weight of the plate, and allow the translation of the plate inside the apparatus. For example, the lower conveyors can be exemplarily made with belts, rollers or chains, and are mechanically connected, in turn, to one or more motors which generate the motion.

The lateral support, in turn, comprises an inlet support, a process support, and an outlet support to support the glass along a lateral surface thereof during the translation, preventing it from tipping over.

In the simplest form thereof, the supports consist of a matrix arrangement of wheels positioned tangentially with the sliding plane of the glass.

The process support lies midway between the inlet support and the outlet support and has the additional function of contrasting the thrust required to adhere the spacer to the glass along a substantially vertical direction, which corresponds to the action line of the applicator.

A further support is the base support, enclosed between the translator and the lower conveyors and consisting of, in the simplest form thereof, one or more rows of wheels arranged along the axis X.

The function of the base support is to support the lower lateral portion of the glass and contrast the thrust of the applicator during the application at the lower side.

The translator substantially comprises a carriage sliding on guides onto which gripping members are mounted.

Thus, the translator is an apparatus which allows a precision movement of the glass along the direction defined by the axis X.

The function of the conveyors is to move the glass from a previous station to a next station, while the precision movement along the axis X, necessary for the application of the profile, occurs by holding the glass with the gripping members of the translator and driving the carriage in an automatic and controlled manner.

Indeed, the application of the spacer occurs in different manners depending on the application direction. For example, in the case of rectangular plates, if the application occurs according to a direction parallel to the glass movement line (i.e., at the upper or lower edge of the plate), the applicator remains stationary, and the glass plate is translated by virtue of the translator. On the contrary, if the application occurs according to a direction substantially perpendicular to the glass movement direction (vertical edges of the glass), the translator remains stationary, and thus the glass plate is locked in a precise position by the translator, and the applicator moves from top downwards or vice versa at the process support.

The foregoing description was made with reference to the application of a spacer to a rectangular plate; in any case, it is possible to apply the spacer along any path, even curved or oblique, by combining the movements along the axis X made by means of the translator, and the movements along the axis Y made by means of the applicator.

Generally, the translator is positioned between the lateral support and the lower conveyors.

The application of the spacer occurs by applying pressure between the applicator and the process support and imparting motion between these two elements and the glass with the spacer partially applied.

However, according to the prior art, the bending stresses are not always and completely cancellable, since a zone of the process support must be kept clear to allow the translator to pass along the axis X.

Therefore, in this zone, the glass is subjected to bending stress during the application of the spacer at a first stretch of the vertical side and at a last stretch of the vertical side, considering that a stretch is processed from the bottom upwards and a next one from the top downwards.

Such a stress is particularly problematic when processing thin glasses, because the strength and stiffness of the glass is such that it produces excessive bending, thus compromising both its strength and its ability to ensure spacer adhesion.

### OVERVIEW OF THE INVENTION

Thus, it is the object of the present invention to solve, at least partially, the drawbacks of the prior art.

It is a first task of the present invention to eliminate, at least partially, the drawbacks mentioned above, with an apparatus and method capable of allowing a flexible spacer to be applied to a glass of any thickness by means of an automatic machine.

At the same time, it is a further task to produce a machine which allows producing lighter glasses with the same performance.

In such a context, the objective of suggesting an effective solution without unduly affecting the implementation cost and the cycle time of the manufacturing line is also sought after.

Such needs are met, at least partially, by an apparatus for applying a flexible spacer to a glass plate according to claim 1, and by a method for applying a flexible spacer to a glass plate according to claim 20.

### DESCRIPTION OF THE DRAWINGS

Further features and advantages of the present invention will become more comprehensible from the following description of preferred, non-limiting embodiments thereof, in which:
figure 1 diagrammatically shows a front view of a possible embodiment of a support backing for applying a flexible spacer for insulating glass to a glass plate, in a first configurations of use;
figure 2 diagrammatically shows a side view of a possible embodiment of an apparatus for applying a flexible spacer for insulating glass to a glass plate, in a first configurations of use;
figure 3 diagrammatically shows a side view of a possible embodiment of an apparatus for applying a flexible spacer for insulating glass to a glass plate, in a second configurations of use;
figure 4 diagrammatically shows a front view of a possible embodiment of a support backing for applying a flexible spacer for insulating glass to a glass plate, in a second configurations of use;
figure 5 diagrammatically shows a side view of a possible embodiment of a component of an apparatus for applying a flexible spacer for insulating glass to a glass plate, in two different configurations of use; and
figure 6 diagrammatically shows a side view of a possible alternative embodiment of an apparatus for applying a flexible spacer for insulating glass to a glass plate, in two alternative configurations;
figure 7 diagrammatically shows in section the step of applying a flexible spacer to a glass; and
figure 8 diagrammatically shows the step of applying a flexible spacer in a frontal view.

The elements or parts of elements common to the embodiments described below will be indicated by the same reference numerals.

### DESCRIPTION OF AN EMBODIMENT

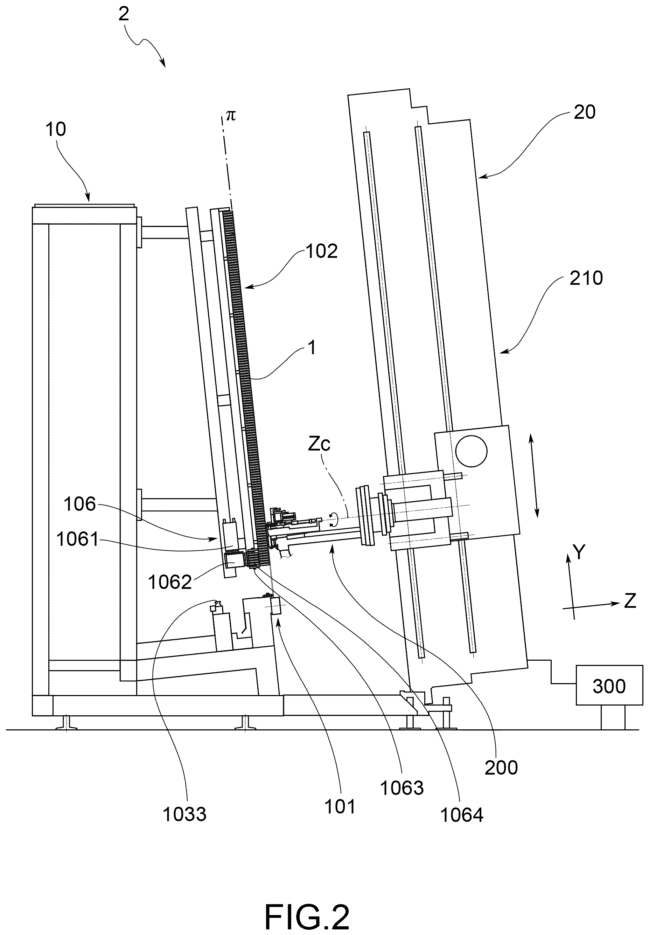

An apparatus for applying a flexible spacer to a glass plate 1 is indicated by reference numeral 2 in figure 2.

The apparatus 2 comprises an applicator 20 for a flexible spacer 3, and a support backing 10 for the glass plate 1, comprising in turn a lateral support 102.

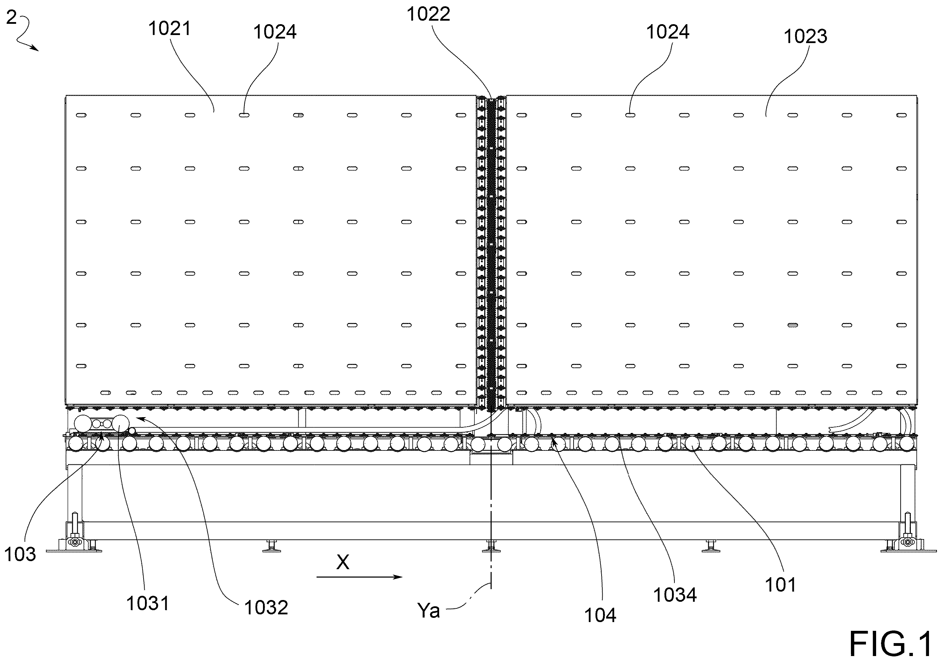

Furthermore, as shown in figure 1, the support backing 10 is arranged with a translator 103, suitable for precision positioning of the glass plate along an advancement axis X of the glass plate in the apparatus 2.

The lateral support 102 comprises an inlet support 1021, a process support 1022, and an outlet support 1023.

The process support 1022 is arranged between the inlet support 1021 and the outlet support 1023, and is adapted to contrast the action of the applicator 20 according to a direction Z substantially perpendicular to the lateral support 102.

As known, the function of the inlet 1021 and outlet 1023 supports is to support the glass plate 1 along a lateral surface 1b thereof during the translation, and to prevent it from tipping over.

Instead, the function of the process support 1022 is to support the plate during the application of the spacer, substantially making a backing on the opposite face of the plate with respect to that to which the spacer is applied, as will be apparent from the remainder of the present description.

The translator 103 is arranged with gripping members 1031 for the glass plate 1, and is adapted to move along an advancement direction X of the glass plate 1, substantially perpendicular to the direction Z. The translator 103 is adapted to transport a glass plate 1 on the lateral support 102.

The apparatus further comprises a contrasting device 106 comprising a contrasting element 1063 adapted to be moved between a support position, in which it forms a continuation of the process support 1022, and a retracted position, in which it is adapted to allow the passage of the translator 103, at the process support 1022.

In other words, in the retracted position, the contrasting element 1063 deviates from the plane defined by the process support 1022, leaving the passage for the translator 103 clear.

As shown in figure 2, the support backing 10 can comprise lower conveyors 101.

Advantageously, the lower conveyors 101 can be of a type known per se to those skilled in the art. In particular, they can be made as idle rollers, motorized rollers, partially motorized rollers, belts, chains, etc. In particular, the lower conveyors can comprise one or more drives according to specific requirements.

According to a possible embodiment, the translator 103 can move between the process support 1022 and the lower conveyors 101. In this case, the contrasting element 1063 can be adapted to be moved between a support position, in which it forms a continuation of the process support 1022, and a retracted position, in which it is adapted to allow the passage of the translator 103 between the process support 1022 and the lower conveyors 101.

The inlet support 1021, the process support 1022 and the outlet support 1023 can comprise a matrix arrangement of wheels 1024 defining a sliding plane π of the glass plate 1.

As shown in figure 1, the process support 1022 can be arranged about the middle of the support backing 10 between the inlet support 1021 and the outlet support 1023. The process support 1022 has the additional function of contrasting the thrust necessary to adhere the flexible spacer 3 to the glass plate along an axis Ya corresponding to an action line of the applicator 20.

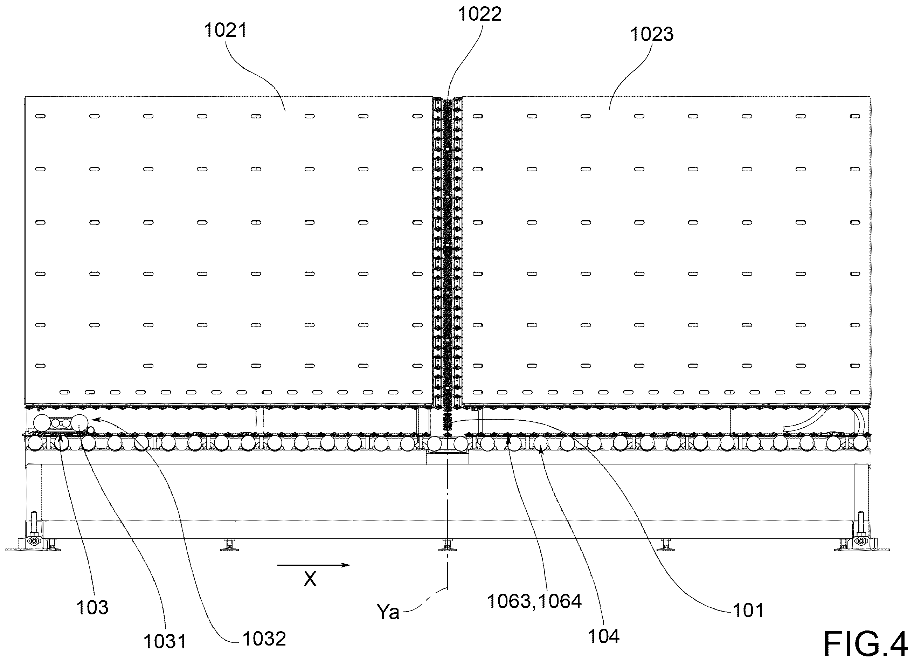

As seen in figures 1 and 4, the process support can comprise a row of wheels, arranged very close to one another.

According to a possible alternative embodiment, the process support can be obtained with a single roller.

The lateral support 102 can comprise a base support 104 for the glass plate 1, arranged at a lower edge of said lateral support 102. According to a possible embodiment, the base support 104 for the glass plate 1 can comprise, for example, at least one row of wheels 1034 arranged along the axis X.

Advantageously, the movement of the translator 103 can be achieved between the process support 1022 and the base support 104.

According to a possible embodiment, the translator 103 can comprise a carriage 1032 sliding on guides 1033 on which the gripping members 1031 are mounted. The gripping members 1031 can be, for example, two suction cups.

The conveyors 101 have the function of moving the glass plate from a previous station to a next station, while the precision movement along the axis X, necessary for the application of the spacer, occurs by holding the glass with the gripping members 1031 of the translator and driving the carriage 1032, for example in an automatic and controlled manner.

According to a possible embodiment, the applicator 20 comprises a fixed portal 210 on which an application carriage 200 can slide along a direction Y defining, together with the direction X, a lying support surface π of said lateral support 102.

The inclination of the support surface with respect to a horizontal plane (and therefore of the direction Y) is usually chosen to be less than 90° (to ensure safety against tipping) but greater than 80° to ensure plan compactness of the machine and correct support on the conveyors 101. Such a machine, like any machine in which glass is supported and fed along one lower edge thereof, is generally referred to as a "vertical machine" in technical jargon.

As shown in figured 7 and 8, the applicator carriage 200 can comprise an applicator roller 2003, the purpose of which is to press the profile 3 against a surface 1a of the glass plate 1, and two lateral guide members 2001, 2002 adapted to keep the profile in an orthogonal position with respect to the glass plate 1.

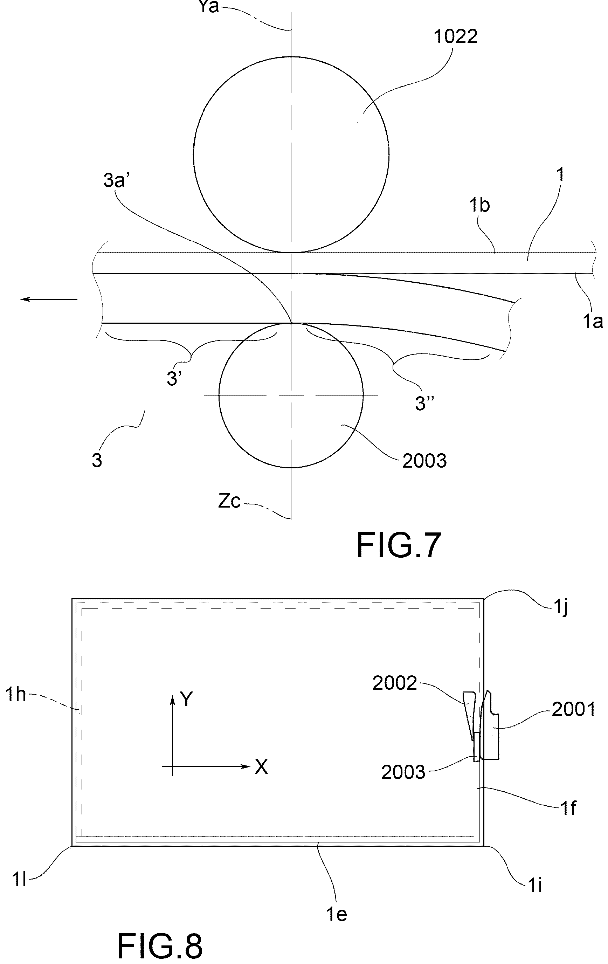

Figure 7 shows a possible step of application at a general instant, in which a part of the spacer has already been adhered to the glass (side 3') and a part thereof (3") is still detached.

The application, as exemplarily shown in figure 7, can occur by applying pressure between the wheel 2003 and the process support 1022 and imparting motion between these two elements and the glass 1 with the spacer 3 partially applied.

The relative motion is given by the composition of the movements along the direction Ya of the application head 200, the rotation thereof about the axis Zc, and the translational motion of the plate operated by the translator 103.

For example, if the plate is rectangular, starting from the edge 11 in figure 8, the applicator first deposits the spacer along a first horizontal side 1e by moving the plate 1 in the direction opposite to X by virtue of the translator 103.

At the edge 1i, the glass is stopped and held still while the head makes an upward rotation of 90° and then the application along the side 1f continues by moving along the direction Y up to the edge 1j.

The process continues in a similar manner until the application is closed at the starting edge 11.

The midpoint of the contact segment 3a' between said wheel 2003 and the spacer 3 can conveniently lie at the rotation axis Zc of the application head 200, which in turn is conveniently chosen so as to be incident with the axis Ya of the process support.

The application segment 3a' can thus be located between the wheel 2003 and the process support 1022 so as to minimise or cancel the bending stress imparted to the glass 1 during application.

As indicated above, returning to the example in figure 8, the glass is subjected to bending stress when applying a first stretch of the vertical side 1f and a last stretch of the vertical side 1h, there being a discontinuity in the process support.

Such a stress would be particularly problematic in processing thin glasses, since the stiffness of the glass is such that it produces excessive deflections, thus compromising its ability to ensure spacer adhesion.

Such a drawback can be overcome by virtue of the contrasting element.

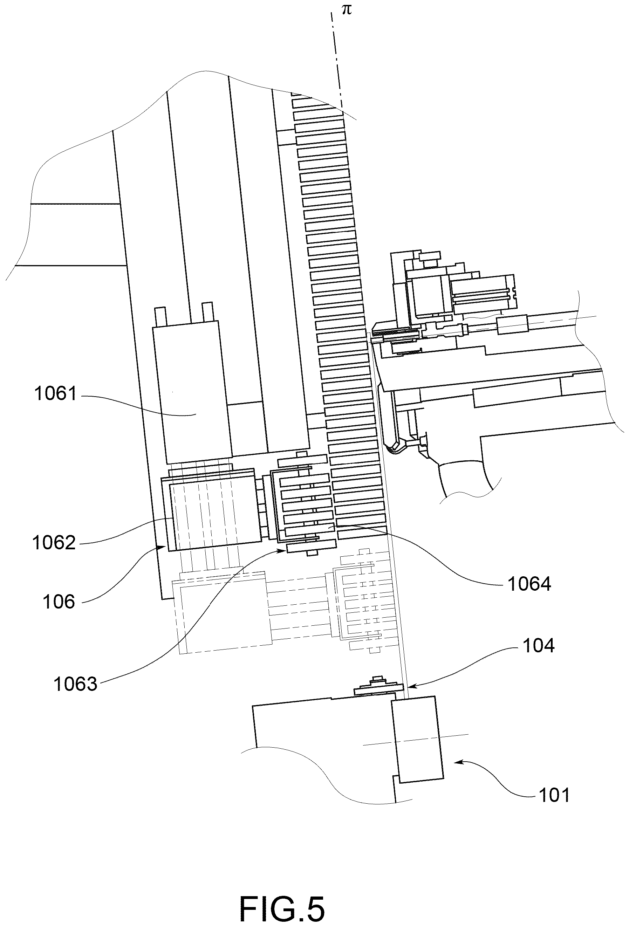

As shown in figure 5, the contrasting element 1063 can comprise at least one rolling element 1064.

Advantageously, the contrasting element 1063 is a set of wheels, e.g., seven wheels keyed onto the same rotation axis.

In the example in figure 5, the contrasting element comprises a U-shaped support between the wings of which the wheels are arranged. Advantageously, in the support position, the at least one rolling element can be tangent to the plane π.

The wheels 1064 can be, for example, the same wheels used for the process support 1022.

According to a possible embodiment, the contrasting element can be a single roller, or a pad element having, for example, a flat operating surface that, in the support position, can substantially coincide with the plane π.

According to a possible embodiment, the contrasting device 106 can comprise at least one linear actuator 1061, 1062 for moving the contrasting element 1063 between the support position and the retracted position.

According to a possible embodiment shown in figures 2, 3 and 5, the contrasting device 106 can comprise two linear actuators 1061, 1062 mounted mutually in series so that a first actuator 1061 performs the translation along a first direction Y and a second actuator 1062 performs the translation along a direction Z.

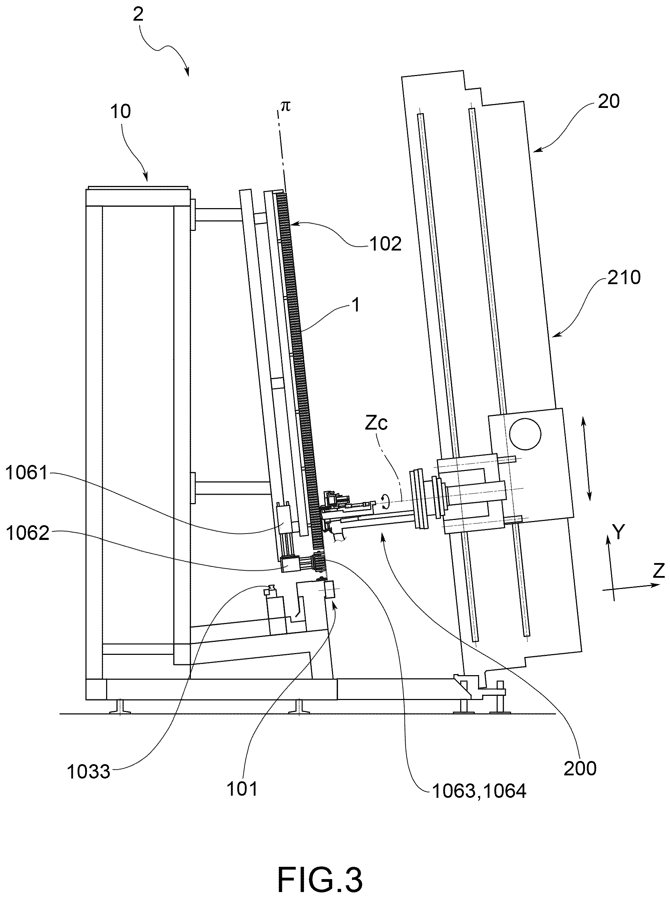

In particular, in figure 2, the contrasting device 106 is in the retracted position, while in figure 3, the contrasting device 106 is in the support position. In figure 5 both positions are depicted, and in particular the support position is depicted by hatching.

According to a possible embodiment, not shown in the accompanying figures, the contrasting device can be made only with a linear actuator, e.g., movable according to the direction Z.

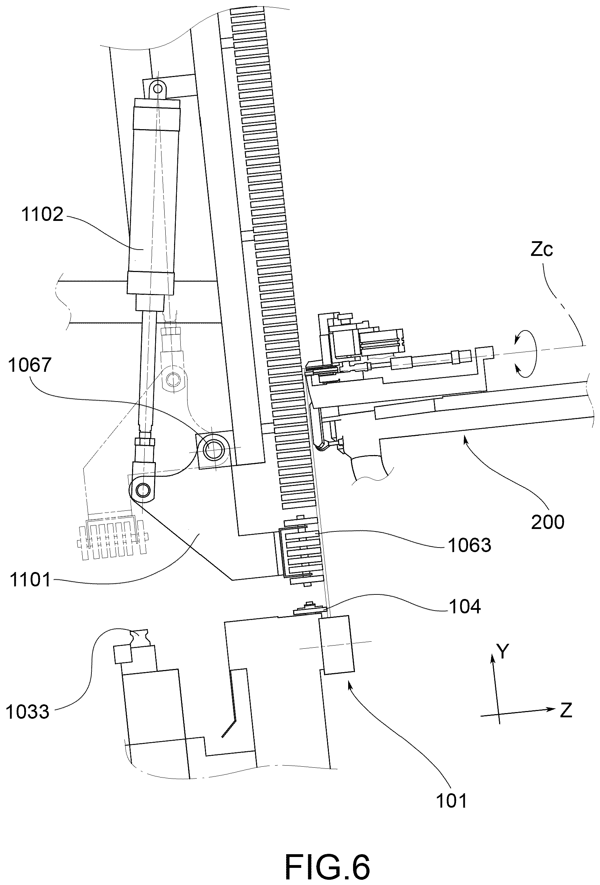

According to a possible embodiment shown in figure 6, the contrasting device 106 can comprise a linear actuator 1102, connected to a support body 1101 arranged on a hinge 1067, at the process support. The support body is arranged at one end with said contrasting element 1063, for moving said contrasting element 1063 between said support position and said retracted position. In particular, in this case, the movement of the contrasting element 1063 will be a rotational movement about the axis of the hinge 1067.

According to alternative embodiments, not shown in the accompanying figures, the mechanism can be obtained by a combination of rotations and translations.

The linear actuators 1061, 1062, 1102 can be pneumatic, hydraulic, rotary cylinders, step or brushless motors.

The method for applying a flexible spacer to a glass plate 1 substantially comprises the steps of:
a) arranging an apparatus according to any one of the preceding claims;
b) positioning a glass plate 1 at the lateral support; and
c) applying a flexible spacer by means of the applicator 20 by virtue of the relative movement between applicator 20 and glass plate 1.

The method comprises a step in which, during the application of the flexible spacer close to the passage zone of the translator 103 at the process support 1022, said contrasting device 106 is activated so that the contrasting element 1063 is moved to the support position in which it forms a continuation of the process support 1022.

Furthermore, the method comprises a step in which, during the passage of the translator 103 at the process support 1022, the contrasting device 106 is activated so that the contrasting element 1063 is moved to a retracted position in which it is adapted to allow the passage of the translator 103 at the process support 1022.

According to a possible embodiment, the apparatus can comprise a central control unit 300, preferably of the programmable type, operatively connected to the contrasting device 106 for actuating the contrasting element 1063.

Advantageously, the central control unit 300 can be operatively connected to the translator 103 and/or to the applicator 20, so that the actuation of the contrasting element can be achieved in an automated manner.

The advantages which can be achieved with the apparatus of the present invention are now apparent.

In particular, during the steps of applying the spacer, there is no interference with the size of the translator 103, because the contrasting element 1063 is a movable element and can be used when needed.

Indeed, for example in the case of a rectangular glass plate, when the applicator is at one of the vertical sides of the plate 1f,1h, the translator 103 will generally be coupled to the glass plate 1 in a centre-of-gravity position with respect to the plate, thus distant from the sides 1f, 1h.

Therefore, an apparatus adapted to apply the spacer has become available even in the case of particularly thin plates, because the bending stresses that were present in the apparatuses of the prior art are substantially eliminated.

In order to meet specific needs, those skilled in the art will be able to make changes to the embodiments described above and/or replace the elements described with equivalent ones, without departing from the scope of the appended claims.

## Claims

1. Apparatus (2) for applying a flexible spacer to a glass plate (1) comprising an applicator (20) of flexible spacers (3), and a support backing (10) for said glass plate (1) comprising a lateral support (102), and at least one translator (103); said lateral support (102) comprising an inlet support (1021), a process support (1022) and an outlet support (1023), wherein the process support (1022), arranged between the inlet support (1021) and the outlet support (1023) is adapted to contrast the action of said applicator (20) according to a direction (Z) substantially perpendicular to said lateral support (102); said translator (103) being adapted to move along an advancement direction (X) of the glass plate (1) which is substantially perpendicular to said direction (Z), and is arranged with gripping members (1031) for said glass plate (1) for transporting a glass plate (1) on said lateral support (102);
said apparatus being **characterised by** comprising a contrasting device (106) comprising a contrasting element (1063) adapted to be moved between a support position in which it makes a continuation of said process support (1022), and a retracted position in which it is adapted to allow the passage of said translator (103) at said process support (1022).

2. Apparatus (2) according to the preceding claim, **characterised in that** said support backing (10) comprises lower conveyors (101).

3. Apparatus (2) according to the preceding claim, **characterised in that** said translator (103) is adapted to move between said process support (1022) and said lower conveyors (101); said contrasting element (1063) being adapted to be moved between a support position in which it makes a continuation of said process support (1022) and a retracted position in which it is adapted to allow the passage of the translator (103) between the process support (1022) and the lower conveyors (101).

4. Apparatus according to any one of the preceding claims, **characterised in that** said inlet support (1021), said process support (1022) and said outlet support (1023) comprise a matrix arrangement of wheels (1024) defining a sliding plane (π) of the glass plate (1).

5. Apparatus according to any one of the preceding claims, **characterised in that** said process support (1022) is arranged in the middle of said support backing (10) between said inlet support (1021) and said outlet support (1023), said process support (1022) having the additional function of contrasting the thrust necessary to make the flexible spacer (3) adhere to the glass plate (1) along an axis (Ya) corresponding to an action line of said applicator (20).

6. Apparatus according to the preceding claim, **characterised in that** said process support (1022) comprises a row of wheels, arranged very close together.

7. Apparatus according to any one of the preceding claims, **characterised in that** said lateral support (102) comprises a base support (104) for said glass plate (1), arranged at a lower edge of said lateral support (102).

8. Apparatus according to the preceding claim, **characterised in that** said base support (104) for said glass plate (1) comprises at least one row of wheels (1034) arranged along the axis (X).

9. Apparatus according to any one of claims 7-8, **characterised in that** the movement of said translator (103) is placed between the process support (1022) and the base support (104).

10. Apparatus according to any one of the preceding claims, **characterised in that** said translator (103) comprises a carriage (1032) sliding on guides (1033) on which gripping members (1031) are mounted.

11. Apparatus according to any one of the preceding claims, **characterised in that** said applicator (20) comprises a fixed portal (210) on which an application carriage (200) can slide along a direction (Ya) defining, together with the direction (X), a lying support surface π of said lateral support (102).

12. Apparatus according to the preceding claim, **characterised in that** said applicator carriage (200) comprises an applicator roller (2003) the purpose of which is to press the profile (3) against a surface (1a) of the glass plate (1), and two lateral guide members (2001, 2002) adapted to hold the profile in an orthogonal position with respect to the glass plate (1).

13. Apparatus according to any one of the preceding claims, **characterised in that** said contrasting element (1063) comprises at least one rolling element (1064).

14. Apparatus according to the preceding claim, **characterised in that** said at least one rolling element (1064) is a set of wheels keyed onto the same rotation axis.

15. Apparatus according to any one of the preceding claims, **characterised in that** said contrasting device (106) comprises at least one linear actuator (1061, 1062) for moving said contrasting device (1063) between said support position and said retracted position.

16. Apparatus according to the preceding claim, **characterised by** comprising two linear actuators (1061, 1062), preferably pneumatic, mounted in series with each other so that a first actuator (1061) performs the translation along a first direction (Y) and a second actuator (1062) performs the translation along a direction (Z).

17. Apparatus according to any one of claims 1-12, **characterised in that** said contrasting device (106) comprises a linear actuator (1065), said linear actuator (1102) being connected to a support body (1101) arranged on a hinge (1067), arranged at one end with said contrasting element, for moving said contrasting element (1063) between said support position and said retracted position.

18. Apparatus according to any one of the preceding claims, **characterised in that** said linear actuators (1061, 1062, 1065) are pneumatic, hydraulic, rotary cylinders, step or brushless motors.

19. Apparatus according to any one of the preceding claims, **characterised by** comprising a central control unit (300), operatively connected to the contrasting device (106) for operating the contrasting element (1063), preferably, said central control unit (300) also being operatively connected to said translator (103) and/or to said applicator (20).

20. Method for applying a flexible spacer to a glass plate (1), comprising the steps of:
a) arranging an apparatus according to any one of the preceding claims;
b) positioning a glass plate (1) at the lateral support;
c) applying a flexible spacer by means of said applicator (20) thanks to the relative movement between said applicator (20) and said glass plate (1);
**characterised by** comprising a step in which, during the application of the flexible spacer near the passage area of the translator (103) at the process support (1022), said contrasting device (106) is activated so that said contrasting element (1063) is moved to the support position in which it makes a continuation of said process support (1022).

21. Method for applying a flexible spacer to a glass plate (1) according to the preceding claim, **characterised by** comprising a step in which during the passage of said translator (103) at said process support (1022), said contrasting device (106) is activated so that said contrasting element (1063) is moved to a retracted position in which it is adapted to allow the passage of said translator (103) at said process support (1022).
